# EUROPÄISCHE PATENTSCHRIFT

(11) **EP 2 335 542 B1**
(45) Veröffentlichungstag und Bekanntmachung des Hinweises auf die Patenterteilung: **18.03.2020**
(21) Anmeldenummer: 10195428.7
(22) Anmeldetag: 16.12.2010
(51) Int. Cl.: A47L 7/00, A47L 9/12, B01D 50/00, B08B 5/04, B65G 53/60

(54) **Vorrichtung zur Absaugung von pulver- oder staubförmigem Material**
Device for extracting powder or particulate material by suction
Dispositif pour l'aspiration de matière en forme de poudre ou poussière

(30) Priorität: 21.12.2009 DE 102009055090
(43) Veröffentlichungstag der Anmeldung: 22.06.2011
(73) Patentinhaber: Ringler GmbH, 73550 Waldstetten (DE)
(72) Erfinder: Ringler, Bernhard, 73550 Waldstetten (DE); Braungardt, Georg, 73529 Schwäbisch Gmünd - Metlangen (DE)
(74) Vertreter: Schmid, Wolfgang

(56) Entgegenhaltungen:
- DE-U1- 9 210 965
- US-A- 3 189 179

## Beschreibung

Die Erfindung betrifft eine Vorrichtung zur Absaugung von pulver- oder staubförmigem Material, insbesondere von gesundheitsgefährdenden Stoffen, nach der im Oberbegriff von Anspruch 1 näher definierten Art.

Gattungsgemäße Saugvorrichtungen sind beispielsweise aus der DE 30 07 345 A1, der DE 103 08 349 B4 oder der DE 92 10 965 U1 bekannt. Wenn derartige Saugvorrichtungen zum Absaugen von gesundheitsgefährdenden oder gar als krebserregend eingestuften Stoffen eingesetzt werden, besteht ein Problem darin, dass beim Entleeren des Sammelbehälters und/oder bei dem damit verbundenen Wechseln des Filterkörpers und eines sich an den Filterkörper anschließenden Feinfilters sehr vorsichtig vorgegangen werden muss, um zu verhindern, dass das zuvor eingesaugte Material aus dem Sammelbehälter bzw. dem Filterkörper austreten und die Bedienperson möglicherweise in Kontakt mit den gesundheitsgefährdenden Stoffen kommen kann. Die aus dem Stand der Technik bekannten Lösungen bieten hierfür keine Gewähr, weshalb beim Entleeren des Sammelbehälters bzw. beim Wechsel des Filterkörpers dieser Saugvorrichtungen teilweise sogar Schutzanzüge und Schutzmasken getragen werden müssen.

Aus der EP 1 495 708 A2 ist eine Filteranordnung für eine Saugvorrichtung bekannt, welche einen Filterkörper mit einem innerhalb desselben angeordneten Feinfilter aufweist.

Die US 3,189,179 beschreibt eine zweistufige Filterpatrone für eine Saugvorrichtung, bei der zwei Filtereinsätze ineinander angeordnet sind.

Es ist daher Aufgabe der vorliegenden Erfindung, eine Vorrichtung zur Absaugung von pulver- oder staubförmigem Material, insbesondere von gesundheitsgefährdenden Stoffen, zu schaffen, bei welcher beim Wechseln des Filterkörpers und des Feinfilters eine Berührung mit dem abgesaugten Medium vermieden wird. Erfindungsgemäß wird diese Aufgabe durch die in Anspruch 1 genannten Merkmale gelöst.

Erfindungsgemäß mündet also die Absaugleitung so in den Filterkörper, dass das abgesaugte Material unmittelbar in den Filterkörper eintritt, wodurch beim Absaugen des pulver- oder staubförmigen Materials gewährleistet ist, dass dieses Material vollständig in den Filterkörper gelangt. Hierbei wird ein Austreten des abgesaugten Materials aus dem Filterkörper bzw. aus dem sich in Richtung des Saugzugs an denselben anschließenden Feinfilter durch den erfindungsgemäßen Deckel des Feinfilters verhindert, so dass zu keiner Zeit das abgesaugte Material aus dem Sammelbehälter austreten kann. Dadurch wird wirkungsvoll verhindert, dass eine den Sammelbehälter der erfindungsgemäßen Vorrichtung austauschende Person mit den abgesaugten, möglicherweise gesundheitsgefährdenden Materialien in Berührung kommen kann.

Dadurch, dass erfindungsgemäß der Filterkörper und der Feinfilter ineinander angeordnet sind, ergibt sich gegenüber bekannten Lösungen eine erhebliche Platzersparnis und es ist außerdem möglich, dass der Deckel des Feinfilters gleichzeitig auch den Filterkörper innerhalb des Sammelbehälters abdichtet und somit ein Austreten des in dem Filterkörper enthaltenen Materials aus dem Sammelbehälter verhindert.

Eine besonders einfache Anordnung des Feinfilters gegenüber dem Filterkörper ergibt sich, wenn der Feinfilter innerhalb des Filterkörpers angeordnet ist. Dadurch kann der Filterkörper von außen, d.h. von der Umfangswandung des Sammelbehälters aus, angeströmt werden und der den Filterkörper verlassende Saugzug kann von außen in den Feinfilter eintreten.

Um diese Anordnung in einfacher Weise durchführen zu können, kann außerdem vorgesehen sein, dass der Filterkörper im Wesentlichen rohrförmig ausgebildet ist.

Eine einfache Versiegelung des Deckels mit dem Material des Feinfilters kann sich ergeben, wenn der Deckel mit dem Feinfilter vergossen oder verklebt ist.

In ähnlicher Weise kann auch der Deckel mit dem Sammelbehälter vergossen oder verklebt sein, wodurch sich eine sehr gute Abdichtung des gesamten Sammelbehälters ergibt.

Um diese Abdichtung zwischen dem Sammelbehälter und dem Deckel noch zu verbessern, kann in einer weiteren vorteilhaften Ausgestaltung der Erfindung vorgesehen sein, dass der Sammelbehälter und der Deckel miteinander korrespondierende Dichtflächen aufweisen.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Es zeigt:
- Fig. 1: eine Seitenansicht einer erfindungsgemäßen Vorrichtung zur Absaugung von pulver- oder staubförmigem Material;
- Fig. 2: eine Draufsicht auf die Vorrichtung gemäß dem Pfeil II aus Fig. 1;
- Fig. 3: eine perspektivische Ansicht des Sammelbehälters der Vorrichtung aus Fig. 1 und Fig. 2;
- Fig. 4: einen Schnitt durch den Sammelbehälter aus Fig. 3; und
- Fig. 5: eine perspektivische Ansicht des Sammelbehälters gemäß Fig. 3 und der in demselben enthaltenen Bauteile.

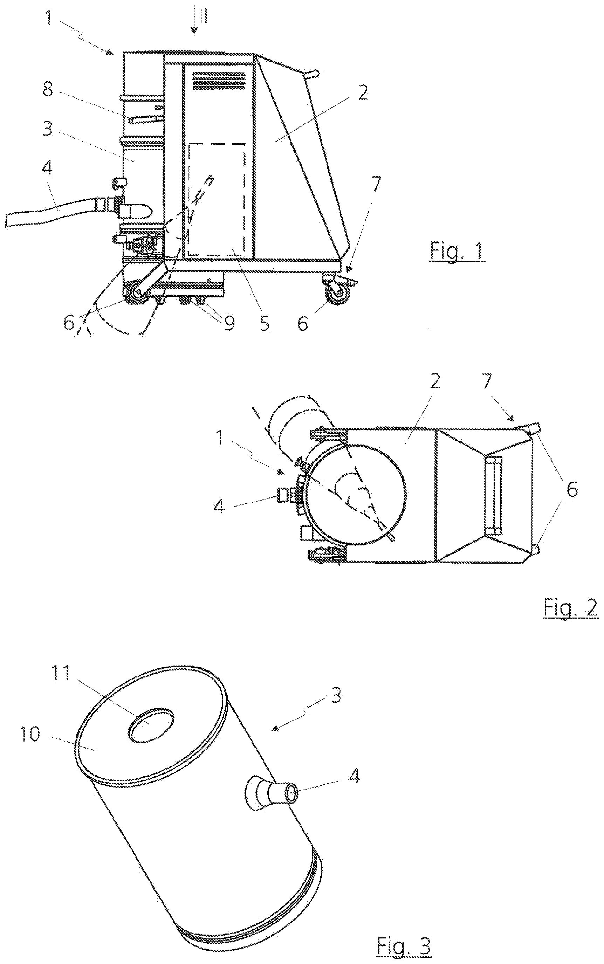

Die Figuren 1 und 2 zeigen in einer Seitenansicht bzw. einer Draufsicht eine Vorrichtung 1 zur Absaugung von nicht dargestelltem pulver- oder staubförmigen Material, insbesondere von gesundheitsgefährdenden Stoffen. Die Absaugvorrichtung 1 ist besonders für den Einsatz in der pharmazeutischen Industrie geeignet, da dort der Kontakt einer die Absaugvorrichtung 1 bedienenden Person mit diesen gesundheitsgefährdenden oder gar als krebserregend eingestuften Stoffen unter allen Umständen verhindert werden soll. Jedoch ist die Absaugvorrichtung 1 auch zur Absaugung anderer Materialien geeignet.

Die Absaugvorrichtung 1 weist ein Gehäuse 2 auf, in welchem ein Sammelbehälter 3 angeordnet ist. Zu dem aus dem Gehäuse 2 entnehmbaren Sammelbehälter 3 führt eine Absaugleitung 4, die in an sich bekannter Weise von der Bedienperson zu der jeweiligen Absaugstelle gebracht werden oder entsprechend angeordnet werden kann. Des weiteren weist die Absaugvorrichtung 1 ein mittels einer gestrichelten Linie angedeutetes Saugaggregat 5 auf, welches beispielsweise als Elektromotor ausgebildet sein oder einen Elektromotor aufweisen kann und in an sich bekannter Weise einen Saugzug in der Absaugleitung 4 herstellt. Der von dem Saugaggregat 5 erzeugte Unterdruck pflanzt sich in das Gehäuse 2 und von dort in den Sammelbehälter 3 und schließlich in die Absaugleitung 4 fort, sodass mit diesem Unterdruck das pulver- oder staubförmige Material abgesaugt werden kann. Das Saugaggregat 5 und das Gehäuse 2 sind im vorliegenden Fall auf einem mehrere Räder 6 aufweisenden Fahrwerk 7 angeordnet. Selbstverständlich könnte die Absaugvorrichtung 1 auch stationär, d. h. ohne Fahrwerk, ausgebildet sein.

Der Sammelbehälter 3 ist mittels einer Hebeeinrichtung, von welcher lediglich ein Bedienhebel 8 dargestellt ist, gegenüber dem Gehäuse 2 anhebbar, so dass der Sammelbehälter 3 im Einsatz keinen Kontakt mit dem Boden aufweist. Mit anderen Worten, an dem Sammelbehälter 3 angebrachte Räder 9 sind in diesem Zustand vom Boden abgehoben. Um den Sammelbehälter 3 gegenüber dem Gehäuse 2 abzudichten, kann im Bereich des Gehäuses 2 eine nicht dargestellte Dichtung vorgesehen sein, gegen welche der Sammelbehälter 3 beim Anheben mittels der Hebeeinrichtung gegenüber dem Gehäuse 2 gepresst wird, so dass sich die genannte Abdichtung ergibt.

In Fig. 3 ist der Sammelbehälter 3 dargestellt, und es ist erkennbar, dass derselbe eine zylindrische Form aufweist und an seiner Oberseite mit einem Deckel 10 verschlossen ist, der eine im vorliegenden Fall zentral angeordnete Öffnung 11 aufweist, aus der die angesaugte Luft in Richtung des Saugaggregats 5 austreten kann. Die äußere Wandung des Sammelbehälters 3 kann beispielsweise aus Edelstahl bestehen, es ist jedoch auch möglich, ein geeignetes Kunststoffmaterial hierfür zu verwenden.

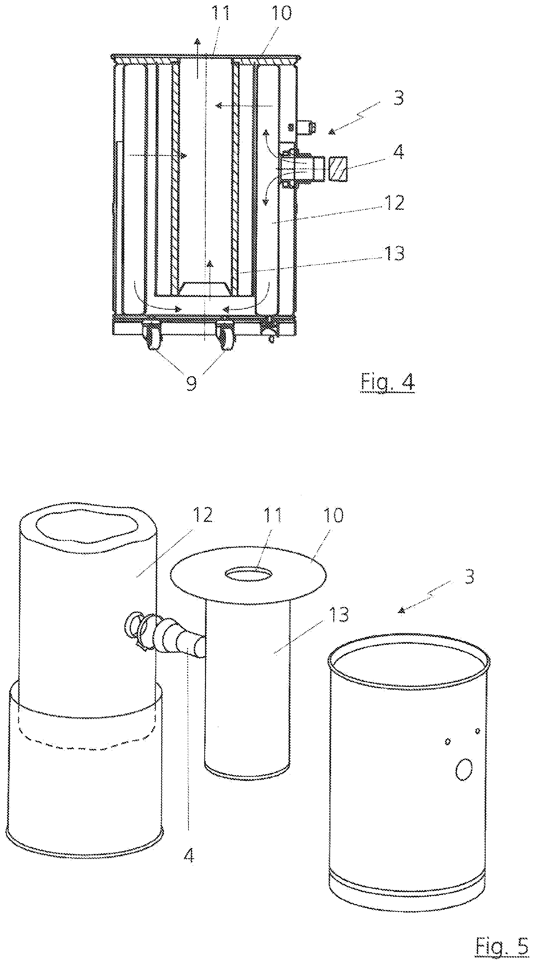

In dem Schnitt gemäß Fig. 4 ist der Sammelbehälter 3 dargestellt und es ist erkennbar, dass sich innerhalb des Sammelbehälters 3 ein als Grobfilter wirkender Filterkörper 12 und ein in Richtung des Saugzugs zwischen dem Filterkörper 12 und dem Saugaggregat 5, also in Richtung des Saugzugs nach dem Filterkörper 12 angeordneter Feinfilter 13 befinden. Hierbei mündet die Absaugleitung 4 derart in den Filterkörper 12, dass das abgesaugte Material unmittelbar in den Filterkörper 12 eintritt. Es ist also nicht möglich, dass sich das angesaugte Material beliebig in dem Sammelbehälter 3 verteilen kann. Möglicherweise den Filterkörper 12 verlassendes, sehr feines Material gelangt dann in den Feinfilter 13 und wird dort so fein gefiltert, dass aus dem Feinfilter 13 ausschließlich gefilterte Reinluft austritt. Die aus dem Feinfilter 13 austretende Reinluft verlässt den Sammelbehälter 3 durch die Öffnung 11 in dem Deckel 10. Der Verlauf des Saugzugs innerhalb des Sammelbehälters 3 ist in Fig. 4 mit entsprechenden Pfeilen dargestellt. Sowohl der Filterkörper 12 als auch der Feinfilter 13 werden dabei von außen nach innen durchströmt, wobei der Feinfilter 13 außer von der Seite auch von unten angeströmt wird.

Der Filterkörper 12 und der Feinfilter 13 sind ineinander angeordnet, was im vorliegenden Fall dadurch realisiert ist, dass der Filterkörper 12 im Wesentlichen rohrförmig ausgebildet ist und der Feinfilter 13 innerhalb des Filterkörpers 12 angeordnet ist. Gegebenenfalls wäre es auch möglich, den Feinfilter 13 außerhalb des Filterkörpers 12 anzuordnen, in diesem Fall müsste der Filterkörper 12 über die Absaugleitung 4 jedoch von unten angeströmt werden, da es erforderlich ist, dass die über die Absaugleitung 4 in den Sammelbehälter 3 eintretende Luft stets zuerst in den Filterkörper 12 eintritt und erst dann in den Feinfilter 13 gelangt. Auch der Deckel 10 wäre in diesem Fall anders ausgebildet und würde beispielsweise einen im Bereich seines Außenumfangs umlaufenden Schlitz aufweisen.

In Fig. 4 sowie in der perspektivischen Darstellung von Fig. 5 ist zu erkennen, dass der Deckel 10 an dem Feinfilter 13 angebracht ist bzw. dass der Feinfilter 13 den Deckel 10 aufweist. Der Deckel 10 ist mit dem Sammelbehälter 3 derart dichtend verbunden, dass die über die Absaugleitung 4 in den Sammelbehälter 3 gelangende Luft den Sammelbehälter 3 ausschließlich durch die Öffnung 11 in dem Deckel 10 verlassen kann. Auf diese Weise wird sichergestellt, dass das abgesaugte Material innerhalb des Filterkörpers 12 oder des Feinfilters 13 verbleibt und sich nicht weiter in dem Gehäuse 2 verteilen kann. Der Deckel 10 ist mit dem Feinfilter 13 vorzugsweise vergossen oder verklebt. Der Deckel 10 kann beispielsweise aus einem Gummi- oder Kunststoffmaterial bestehen, welches bereits bei der Herstellung mit dem Feinfilter 13 vergossen wird. Eine andere Möglichkeit zur dichten Verbindung des Deckels 10 mit dem Feinfilter 13 besteht in der Verwendung einer geeigneten Vergussmasse. Auch mit dem Sammelbehälter 3 kann der Deckel 10 verklebt oder vergossen werden, um eine entsprechend dichte Verbindung zu schaffen und ein Austreten des Materials aus dem Sammelbehälter 3 unter allen Umständen zu vermeiden. In diesem Zusammenhang können der Sammelbehälter 3 und der Deckel 10 miteinander korrespondierende Dichtflächen aufweisen, die jedoch nicht dargestellt sind. Diese Dichtflächen können beispielsweise als miteinander korrespondierende konvexe und konkave Radien ausgeführt sein.

Während der Filterkörper 12 vorzugsweise aus einem papierähnlichen Material besteht und, wie bereits oben erwähnt, im Wesentlichen rohrförmig ausgebildet ist, weist der Feinfilter 13 vorzugsweise offenporige Filtermatten auf, welche an ihrer Außen- und/oder Innenseite von jeweiligen, nicht dargestellten Lochblechen, Gittern oder dergleichen umgeben sind. In den Filtermatten werden dann die sehr feinen Partikel, welche den Filterkörper 12 noch verlassen können, aufgenommen.

Wenn sich der Filterkörper 12 oder der Feinfilter 13 derart mit dem abgesaugten Material gefüllt haben, dass es erforderlich ist, eines dieser Elemente oder beide auszutauschen, so wird der gesamte Sammelbehälter 3 aus dem Gehäuse 2 entnommen und komplett, d. h. mit dem sich darin befindlichen Filterkörper 12 und dem Feinfilter 13, entsorgt. Auf diese Weise ergibt sich also eine sehr einfache Entsorgung des Filterkörpers 12 und des Feinfilters 13, die nicht aus dem Sammelbehälter 3 entfernt werden müssen. Gegebenenfalls kann die Öffnung 11 des Deckels 10 bei der Entsorgung mit einem nicht dargestellten Verschlussdeckel verschlossen werden, dies ist jedoch nicht zwingend erforderlich, da, wie bereits oben erwähnt, aus der Öffnung 11 lediglich gereinigte Luft austreten kann. Zum Entnehmen des Sammelbehälters 3 aus dem Gehäuse 2 kann die oben beschriebene Hebeeinrichtung verwendet werden, um den Sammelbehälter 3 nach unten abzusenken. Der Füllzustand des Filterkörpers 12 und/oder des Feinfilters 13 kann mit entsprechenden Sensoren, welche den durch die Vorrichtung 1 erzeugten Gegendruck in an sich bekannter Weise messen, festgestellt werden.

In einer nicht dargestellten Ausführungsform der Vorrichtung 1 könnte der Sammelbehälter 3 auch außerhalb des Gehäuses 2 angeordnet sein. Das abzusaugende Material könnte in diesem Fall wie oben beschrieben über die Absaugleitung 4 in den Sammelbehälter 3 eingesaugt werden. Die Öffnung 11 könnte dabei über eine geeignete Leitung mit dem Saugaggregat 5 verbunden sein, sodass sich am oben beschriebenen Prinzip nichts ändern würde, mit der Ausnahme, dass der Sammelbehälter 3 nicht in demselben Gehäuse angeordnet wäre wie das Saugaggregat 5 und praktisch als stand-alone Gerät ausgeführt wäre. Bei einer solchen Ausführungsform könnte beispielsweise ein handelsüblicher Sauger zum Einsatz kommen, in dem das Saugaggregat 5 angeordnet und über die Leitung mit dem Sammelbehälter 3 verbunden wäre.

## Patentansprüche

1. Vorrichtung (1) zur Absaugung von pulver- oder staubförmigem Material, insbesondere von gesundheitsgefährdenden Stoffen, mit einem Gehäuse (2), mit einem Sammelbehälter (3) zur Aufnahme des abgesaugten Materials, mit einer zu dem Sammelbehälter (3) führenden Absaugleitung, mit einem einen Saugzug in der Absaugleitung (4) erzeugenden Saugaggregat (5) und mit einem in Richtung des Saugzugs zwischen der Absaugleitung (4) und dem Saugaggregat (5) angeordneten Filterkörper (12), **dadurch gekennzeichnet, dass** in Richtung des Saugzugs zwischen dem Filterkörper (12) und dem Saugaggregat (5) ein Feinfilter (13) angeordnet ist, dass die Absaugleitung (4) derart in den Filterkörper (12) mündet, dass das abgesaugte Material unmittelbar in den Filterkörper (12) eintritt, dass der Filterkörper (12) und der Feinfilter (13) ineinander angeordnet sind, und dass der Feinfilter (13) einen Deckel (10) aufweist, welcher mit dem Sammelbehälter (3) derart dichtend verbunden ist, dass ausschließlich eine Öffnung (11) für aus dem Feinfilter (13) austretende, gefilterte Luft verbleibt.

2. Vorrichtung nach Anspruch 1,
**dadurch gekennzeichnet, dass**
der Feinfilter (13) innerhalb des Filterkörpers (12) angeordnet ist.

3. Vorrichtung nach Anspruch 2,
**dadurch gekennzeichnet, dass**
der Filterkörper (12) im Wesentlichen rohrförmig ausgebildet ist.

4. Vorrichtung nach Anspruch 1, 2 oder 3,
**dadurch gekennzeichnet, dass**
der Deckel (10) mit dem Feinfilter (13) vergossen oder verklebt ist.

5. Vorrichtung nach einem der Ansprüche 1 bis 4,
**dadurch gekennzeichnet, dass**
der Deckel (10) mit dem Sammelbehälter (3) vergossen oder verklebt ist.

6. Vorrichtung nach Anspruch 5,
**dadurch gekennzeichnet, dass**
der Sammelbehälter (3) und der Deckel (10) miteinander korrespondierende Dichtflächen aufweisen.

7. Vorrichtung nach einem der Ansprüche 1 bis 6,
**dadurch gekennzeichnet, dass**
der Deckel (10) aus einem Gummi- oder Kunststoffmaterial besteht.

8. Vorrichtung nach einem der Ansprüche 1 bis 7,
**dadurch gekennzeichnet, dass**
die Öffnung (11) in dem Deckel (10) des Feinfilters (13) mit einem Verschlussdeckel verschließbar ist.

9. Vorrichtung nach einem der Ansprüche 1 bis 8,
**dadurch gekennzeichnet, dass**
der Feinfilter (13) offenporige Filtermatten aufweist, welche an ihrer Außen- und/oder Innenseite von jeweiligen Lochblechen oder Gittern umgeben sind.

10. Vorrichtung nach einem der Ansprüche 1 bis 9,
**dadurch gekennzeichnet, dass**
der Sammelbehälter (3) mittels einer Hebeeinrichtung gegenüber dem Gehäuse (2) anhebbar ist, wobei das Gehäuse (2) eine Dichtung aufweist, und wobei
bei dem Anheben der Sammelbehälter (3) gegen die Dichtung gepresst wird.

## Claims

1. Device (1) for extracting powder or particulate material by suction, in particular substances hazardous to health, having a housing (2), a collecting container (3) for receiving the extracted material, a suction line leading to the collecting container (3), a suction unit (5) producing a suction in the suction line (4) and a filter body (12) arranged between the suction line (4) and the suction unit (5) in the direction of suction, **characterized in that** a fine filter (13) is arranged between the filter body (12) and the suction unit (5) in the direction of suction, that the suction line (4) opens into the filter body (12) in such a way that the extracted material directly enters the filter body (12), that the filter body (12) and the fine filter (13) are arranged one inside the other, and that the fine filter (13) has a cover (10) which is sealingly connected to the collecting container (3) in such a way that only one opening (11) remains for filtered air escaping out of the fine filter (13).

2. Device according to claim 1, **characterized in that** the fine filter (13) is arranged inside the filter body (12).

3. Device according to claim 2, **characterized in that** the filter body (12) is essentially tubular.

4. Device according to claim 1, 2 or 3, **characterized in that** the cover (10) is cast or glued to the fine filter (13).

5. Device according to one of claims 1 to 4, **characterized in that** the cover (10) is cast or glued to the collecting container (3).

6. Device according to claim 5, **characterized in that** the collecting container (3) and the cover (10) have mutually corresponding sealing surfaces.

7. Device according to one of claims 1 to 6, **characterized in that** the cover (10) consists of a rubber or plastic material.

8. Device according to one of claims 1 to 7, **characterized in that** the opening (11) in the cover (10) of the fine filter (13) can be closed with a closure lid.

9. Device according to one of claims 1 to 8, **characterized in that** the fine filter (13) has open-pore filter mats, which are surrounded on their outside and/or inside by respective perforated plates or grids.

10. Device according to one of claims 1 to 9, **characterized in that** the collecting container (3) can be lifted relative to the housing (2) by means of a lifting device, wherein the housing (2) has a seal, and wherein the collecting container (3) is pressed against the seal when being lifted.

## Revendications

1. Dispositif (1) pour l'aspiration de matière en forme de poudre ou de poussière, en particulier de substances dangereuses pour la santé, avec un boîtier (2), avec un réservoir collecteur (3) pour recevoir la matière aspirée, avec une conduite d'aspiration menant au réservoir collecteur (3), avec un groupe d'aspiration (5) produisant un flux d'aspiration dans la conduite d'aspiration (4) et avec un corps de filtre (12) disposé en direction du flux d'aspiration entre la conduite d'aspiration (4) et le groupe d'aspiration (5), **caractérisé en ce qu'**un filtre fin (13) est disposé en direction du flux d'aspiration entre le corps de filtre (12) et le groupe d'aspiration (5), **en ce que** la conduite d'aspiration (4) débouche dans le corps de filtre (12), de telle manière que la matière aspirée pénètre directement dans le corps de filtre (12), **en ce que** le corps de filtre (12) et le filtre fin (13) sont agencés l'un dans l'autre, et **en ce que** le filtre fin (13) comporte un couvercle (10), qui est relié de manière étanche au réservoir collecteur (3), de telle sorte qu'il ne reste qu'une ouverture (11) pour l'air filtré sortant du filtre fin (13).

2. Dispositif selon la revendication 1, **caractérisé en ce que** le filtre fin (13) est disposé à l'intérieur du corps de filtre (12).

3. Dispositif selon la revendication 2, **caractérisé en ce que** le corps de filtre (12) est de forme essentiellement tubulaire.

4. Dispositif selon la revendication 1, 2 ou 3, **caractérisé en ce que** le couvercle (10) est moulé ou collé avec le filtre fin (13).

5. Dispositif selon l'une quelconque des revendications 1 à 4, **caractérisé en ce que** le couvercle (10) est moulé ou collé avec le réservoir collecteur (3).

6. Dispositif selon la revendication 5, **caractérisé en ce que** le réservoir collecteur (3) et le couvercle (10) comportent des surfaces d'étanchéité mutuellement correspondantes.

7. Dispositif selon l'une quelconque des revendications 1 à 6, **caractérisé en ce que** le couvercle (10) est en caoutchouc ou en matière plastique.

8. Dispositif selon l'une quelconque des revendications 1 à 7, **caractérisé en ce que** l'ouverture (11) dans le couvercle (10) du filtre fin (13) peut être fermée avec un couvercle de fermeture.

9. Dispositif selon l'une quelconque des revendications 1 à 8, **caractérisé en ce que** le filtre fin (13) comporte des nappes filtrantes à pores ouverts, qui sont entourées du côté extérieur et/ou intérieur par des feuilles perforées ou des grilles respectives.

10. Dispositif selon l'une quelconque des revendications 1 à 9, **caractérisé en ce que** le réservoir collecteur (3) peut être soulevé par rapport au boîtier (2) au moyen d'un dispositif de levage, dans lequel le boîtier (2) comporte un joint d'étanchéité, et dans lequel le réservoir collecteur (3) est pressé contre le joint d'étanchéité lors du levage.
